**Europäisches Patentamt**

**European Patent Office**

**Office européen des brevets**

(19)

(11) Veröffentlichungsnummer: **0 056 503**

**A2**

(12)

# EUROPÄISCHE PATENTANMELDUNG

(21) Anmeldenummer: **81201378.7**

(22) Anmeldetag: **17.12.81**

(51) Int. Cl.³: **C 25 B 9/00**

(30) Priorität: **15.01.81 DE 3101120**

(43) Veröffentlichungstag der Anmeldung:
**28.07.82 Patentblatt 82/30**

(84) Benannte Vertragsstaaten:
**AT BE CH DE FR GB IT LI LU NL SE**

(71) Anmelder: **METALLGESELLSCHAFT AG**
**Reuterweg 14 Postfach 3724**
**D-6000 Frankfurt/M.1(DE)**

(72) Erfinder: **Wüllenweber, Heinz**
**Schweinfurter Weg 22**
**D-6000 Frankfurt am Main 70(DE)**

(74) Vertreter: **Fischer, Ernst, Dr.**
**Reuterweg 14**
**D-6000 Frankfurt am Main 1(DE)**

(54) **Wasserelektrolyseur der Filterpressenbauart.**

(57) Die Erfindung betrifft einen Wasserelektrolyseur der Filterpressenbauart mit druckfesten Zersetzungszellen, die jeweils durch ein Diaphragma (4) in zwei Elektrodenräume unterteilte Elektrolyträume aufweisen. Die Zersetzungszellen sind außen von durch einen zwischenliegenden Dichtungsring (5) voneinander elektrisch isolierten Hälften zweier Zellenrahmen (2) umschlossen, an den Seiten durch metallische Zellentrennwände (1) von den benachbarten Zellen getrennt und von mindestens drei aus Teilstücken (7, 8) zusammengesetzten Kanälen (6) für die Zuführung von Elektrolyt und die Abführung von Wasserstoff und Sauerstoff durchzogen. Die die Kanäle (6) bildenden Teilstücke (7, 8) sind aus bei Betriebsbedingungen resistenten, gegeneinander isolierten Buchsen (7) gebildet und in Durchführungsöffnungen angeordnet, die in den Zellentrennwänden (1) angebracht und mit Metallringen (8) eingefaßt sind. Gemäß der Erfindung ist vorgesehen, daß die Metallringe (8) an den Zellentrennwänden (1) durch eine gas- und flüssigkeitsdichte Schweißverbindung befestigt und die Buchsen (7) in die Metallringe (8) eingeschoben sind.

EP 0 056 503 A2

0056503

METALLGESELLSCHAFT
Aktiengesellschaft
Reuterweg 14
6000 Frankfurt/M.1

15. Januar 1981
DROZ/LWU

Prov. Nr. 8495 LT

## Wasserelektrolyseur der Filterpressenbauart

Die Erfindung betrifft einen Wasserelektrolyseur der Filterpressenbauart mit druckfesten Zersetzungszellen, die jeweils durch ein Diaphragma in zwei Elektrodenräume unterteilte Elektrolyträume aufweisen, außen von durch einen zwischenliegenden Dichtungsring voneinander elektrisch isolierten Hälften zweier Zellenrahmen umschlossen sind, an den Seiten durch metallische Zellentrennwände von den benachbarten Zellen getrennt und von mindestens drei aus Teilstücken zusammengesetzten Kanälen für die Zuführung von Elektrolyt und die Abführung von Wasserstoff und Sauerstoff durchzogen sind, wobei die Teilstücke aus bei Betriebsbedingungen resistenten, gegeneinander isolierten Buchsen gebildet sind, die in in den Zellentrennwänden angebrachte und mit Metallringen eingefaßte Durchführungsöffnungen angeordnet sind.

Druckwasserelektrolyseure der Filterpressenbauart bestehen aus einer Vielzahl von aneinandergereihten, durch Zuganker zu einem Paket zusammengespannten elektrolytischen Zellen. Jede Zelle wird von zwei Zellentrennwänden, die üblicherweise waffelartig geprägt und vollständig vernickelt sind, begrenzt. Vor den Zellentrennwänden befinden sich vernickelte Stahldrahtgewebe, die als eigentliche Elektroden wirken. Durch ein Diaphragma, gewöhnlich aus Asbest, erfolgt eine Trennung der Zelle in einen Anodenraum und einen Kathodenraum. Zur getrennten Ableitung des erzeugten Wasserstoffes und Sauerstoffes dienen dabei zwei Kanäle, welche längs durch das ganze Zellenpaket hindurchgeführt sind. Der eine Kanal ist mit den Kathodenräumen und der andere mit den Anodenräumen sämtlicher Zellen verbunden. Beim Betrieb des Druckwasserelektrolyseurs gelangen die gebildeten Gase und Elektrolyt in die Gaskanäle. Elektrolyt wird in Abscheidern vom Gas getrennt. Der Elektrolyt wird mit destilliertem Wasser entsprechend der Wasserstoff- und Sauerstoffbildung ergänzt und über einen Elektrolytkanal den Zellen wieder zugeführt.

Es ist bekannt, die unmittelbar durch die Zellenräume hindurchgeführten Gaskanäle aus einzelnen Kanalstücken zu bilden, wobei z.B. die aneinandergereihten Buchsen wenigstens teilweise aus fluorhaltigem Kunststoff bestehen (CH-PS 334 612). Die Buchsen werden an den bipolaren Zellentrennwänden befestigt und - unter Einbezug des Diaphragmas als Dichtungsring zwischen aufeinanderfolgenden Buchsen - zu einem durchgehenden Gaskanal aneinandergeschlossen. Durch geeignete Anordnung von Querbohrungen ist eine Verbindung vom Kathodenraum zum Wasserstoffkanal und vom Anodenraum zum Sauerstoffkanal geschaffen.

Neben dem in der zitierten Patentschrift behandelten Problem der möglichst weitgehenden Herabsetzung von Nebenschlußströmen ist ein weiteres, mindestens ebenso wichtiges, zur Vermeidung einer Knallgasbildung den Übertritt von Wasserstoff aus dem Kathodenraum in den Sauerstoffkanal und von Sauerstoff aus dem Anodenraum in den Wasserstoffkanal zu verhindern. Hierzu werden üblicherweise die Zellentrennwände umfassende Kanalstücke vorgesehen, die aus einem Flanschstück und einem aufschraubbaren Ring bestehen.

Eine weitere Ausgestaltung des Kanalstückes für die dichtende Umfassung einer Gaskanalöffnung der Zellentrennwand eines Druckwasserelektrolyseurs in Filterpressenbauart besteht darin, das mit Querbohrungen versehene Flanschstück mit zugehörigem Hals mit einem Ring zu versehen, der als Druckring ausgebildet ist und eine Ausnehmung für eine zumindest gasundurchlässige, dauerelastische und elektrolytbeständige Dichtmasse in der Gestalt einer Manschette aufweist (DE-OS 27 03 247).

Trotz hoher Paßgenauigkeit der das Kanalstück bildenden Teile, die enge Fertigungstoleranzen und erheblichen Kontrollaufwand verlangen, wurde festgestellt, daß - insbesondere nach längeren Betriebskampagnen - sowohl Schraubals auch Steckverbindungen nicht die erwünschte Dichtigkeit besitzen und durch die Kanalstücke Wasserstoff zur Sauerstoffseite bzw. Sauerstoff zur Wasserstoffseite diffundieren. Insbesondere der zur Wasserstoffseite diffundierende Sauerstoff wird augenblicklich zu Wasser verbrannt, was mit einer erheblichen lokalen Erhitzung und starken Korrosionserscheinungen verbunden ist.

Aufgabe der Erfindung ist es, einen Wasserelektrolyseur bereitzustellen, der die Nachteile der bekannten Vorrichtung nicht aufweist und derart konzipiert ist, daß insbesondere eine Gasdiffusion in fremde Gasräume zuverlässig vermieden wird.

Die Aufgabe wird gelöst, indem der Wasserelektrolyseur der eingangs genannten Art entsprechend der Erfindung derart ausgestaltet wird, daß die Metallringe 8 an den Zellentrennwänden 1 durch eine gas- und flüssigkeitsdichte Schweißverbindung befestigt und die Buchsen 7 in die Metallringe 8 eingeschoben sind.

Überraschenderweise wurde diese Ausführungsform bisher nicht erkannt, obgleich Wasserelektrolyseure der eingangs genannten Art bereits seit

ca. 25 Jahren arbeiten, die angesprochenen Nachteile etwa ebensolange bekannt sind und durch Ausbesserungen und teilweise Erneuerungen von Anlageteilen die Korrosionsschäden in bestimmten Abständen beseitigt werden mußten.

Der durch eine Schweißverbindung befestigte Metallring verhindert ein Eindiffundieren von Gas in den benachbarten Elektrodenraum, so daß die obengenannten nachteiligen Effekte nicht auftreten können. Die Schweißverbindung hindert nicht, daß gegebenenfalls Gas über die Auflage der Buchse auf der Zellentrennwand in den Gaskanal gelangt. Hierbei ist jedoch nur ein Zugang zu dem Gaskanal möglich, in den es durch die in der Buchse befindlichen Querbohrungen ohnehin geführt wird.

Eine bevorzugte Ausgestaltung der Erfindung besteht darin, den Wasserelektrolyseur mit Metallringen auszustatten, die jeweils einen Hals aufweisen, der in die entsprechend größer ausgeführte Durchführungsöffnung der Zellentrennwand eingreift und dessen Länge etwa gleich der Dicke der Zellentrennwand ist.

Diese Ausgestaltung ist insbesondere fertigungstechnisch vorteilhaft, indem die gas- und flüssigkeitsdichte Schweißverbindung infolge der Zentrierung des Metallrings in der Zellentrennwand in besonders einfacher Weise herstellbar ist. Die die Teilstücke des Kanals bildenden Buchsen können aus unterschiedlichsten Materialien hergestellt sein. Es ist lediglich erforderlich, daß sie unter Betriebsbedingungen resistent und gegeneinander isoliert sind. So sind Metallbuchsen möglich, die mindestens an einer Kopfseite eine Isolation aufweisen. Es sind auch Buchsen geeignet, die einen Metallkern und einen allseitig aufgebrachten resistenten und isolierenden Überzug aufweisen.

Besonders vorteilhaft ist es, die Buchsen aus  geeignetem Kunststoff, insbesondere aus Polytetrafluoräthylen, herzustellen.

Die Buchsen weisen üblicherweise einen zylindrischen Teil und einen Hals zur Führung des Diaphragmas sowie eine Schulter zur Auflage auf der Zellentrennwand auf.

Die weiteren den Wasserelektrolyseur bildenden Elemente sind an sich bekannter Art. So ist es zweckmäßig, die Zellentrennwände aus sogenannten Warzenblechen und/die Wasserzersetzung bewirkenden (aktiven) Elektroden aus Metalldrahtgewebe herzustellen. Die Metalldrahtgewebe werden dabei von den Erhebungen des Warzenblechs gestützt und gegen das Diaphragma, das vorzugsweise aus Asbest besteht, gedrückt. Sowohl Warzenblech als auch Metalldrahtgewebe bestehen üblicherweise aus vernickeltem Stahl.

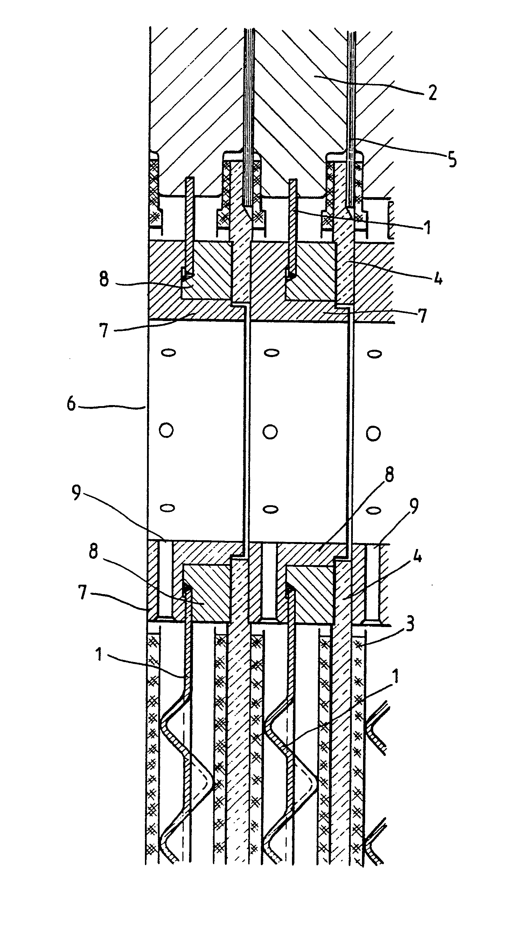

Die Erfindung wird anhand der Figur beispielsweise und näher erläutert.

Die Figur veranschaulicht einen Schnitt durch einen Wasserelektrolyseur längs eines Gaskanals und zeigt zwei vollständige Zellen im Ausschnitt.

Jede der in der Figur dargestellten Zellen besitzt zwei Zellen-Trennwände 1, davorliegende Metalldrahtgewebe 3 und ein zwischen den Metalldrahtgeweben 3 liegendes Diaphragma 4. Mit 5 ist der zwischen zwei Zellenrahmen 2 liegende Dichtungsring bezeichnet. 6 stellt einen der beiden im Wasserelektrolyseur vorhandenen Gaskanäle dar. Die das Kanalstück bildende Buchse 7 ist über den mit 8 bezeichneten Metallring geschoben. Sie wird einerseits durch das Diaphragma 4 und andererseits durch den Metallring 8 in ihrer Lage fixiert. 9 bezeichnet die Bohrung in der Buchse 7, die die Verbindung zwischen Elektrodenraum und zugehörigem Gaskanal 6 herstellt.

Patentansprüche

1. Wasserelektrolyseur der Filterpressenbauart mit druckfesten Zersetzungszellen, die jeweils durch ein Diaphragma in zwei Elektrodenräume unterteilte Elektrolyträume aufweisen, außen von durch einen zwischenliegenden Dichtungsring voneinander elektrisch isolierten Hälften zweier Zellenrahmen umschlossen sind, an den Seiten durch metallische Zellentrennwände von den benachbarten Zellen getrennt und von mindestens drei aus Teilstücken zusammengesetzten Kanälen für die Zuführung von Elektrolyt und die Abführung von Wasserstoff und Sauerstoff durchzogen sind, wobei die Teilstücke aus bei Betriebsbedingungen resistenten, gegeneinander isolierten Buchsen gebildet sind, die in in den Zellentrennwänden angebrachten und mit Metallringen eingefaßten Durchführungsöffnungen angeordnet sind, dadurch gekennzeichnet, daß die Metallringe (8) an den Zellentrennwänden (1) durch eine gas- und flüssigkeitsdichte Schweißverbindung befestigt und die Buchsen (7) in die Metallringe (8) eingeschoben sind.

2. Wasserelektrolyseur nach Anspruch 1, dadurch gekennzeichnet, daß die Metallringe (8) jeweils einen Hals aufweisen, der in die entsprechend größer ausgeführte Durchführungsöffnung der Zellentrennwand (1) eingreift und dessen Länge etwa gleich der Dicke der Zellentrennwand (1) ist.

3. Wasserelektrolyseur nach Anspruch 1 oder 2, dadurch gekennzeichnet, daß die Buchse (7) aus Kunststoff besteht.

4. Wasserelektrolyseur nach Anspruch 3, dadurch gekennzeichnet, daß die Buchse (7) aus Polytetrafluoräthylen besteht.